(19) Europäisches Patentamt / European Patent Office / Office européen des brevets

(11) **EP 1 835 301 B1**

(12) **FASCICULE DE BREVET EUROPEEN**

(45) Date de publication et mention de la délivrance du brevet:
**16.08.2017 Bulletin 2017/33**

(51) Int Cl.:
*H01Q 3/26* $^{(2006.01)}$     *G01S 7/28* $^{(2006.01)}$
*G01S 7/40* $^{(2006.01)}$     *G01S 13/02* $^{(2006.01)}$

(21) Numéro de dépôt: **07104298.0**

(22) Date de dépôt: **16.03.2007**

(54) **Procédé de compensation des erreurs de positionnement des éléments rayonnants d'une antenne reseau**

Verfahren zur Kompensation von Fehlern bei der Positionierung von strahlenden Elementen einer Gruppenantenne

Method of compensating for errors in positioning radiating elements of a network antenna

(84) Etats contractants désignés:
**DE GB IT**

(30) Priorité: **17.03.2006 FR 0602381**

(43) Date de publication de la demande:
**19.09.2007 Bulletin 2007/38**

(73) Titulaire: **THALES**
**92400 Courbevoie (FR)**

(72) Inventeurs:
• **ROUZEAUD, Benjamin**
  **80460, FRIAUCOURT (FR)**
• **CHEKROUN, Claude**
  **91190, GI F SUR YVETTE (FR)**
• **LIENHART, Marc Yves**
  **75015, Paris (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-93/11581**

• **ZAGHLOUL AMIR I ET AL: "ON THE REMOVAL OF BLINDNESS IN PHASED ANTENNA BY ELEMENT POSITIONING ERRORS" IEEE TRANSACTIONS ON ANTENNAS AND PROPAGATION, IEEE SERVICE CENTER, PISCATAWAY, NJ, US, vol. AP-20, 1972, pages 637-641, XP008072326 ISSN: 0018-926X**
• **ZAGHLOUL A I ET AL: "GENERALIZED CROSS-CORRELATION ANALYSIS OF PHASED ARRAY ADMITTANCE" RADIO SCIENCE, AMERICAN GEOPHYSICAL UNION, WASHINGTON, DC,, US, vol. 11, no. 1, janvier 1976 (1976-01), pages 61-70, XP008072327 ISSN: 0048-6604**

**Description**

DOMAINE DE L'INVENTION

L'invention se rapporte au domaine des antennes réseaux, composées d'un ensemble de sources individuelles réparties sur la surface de l'antenne et dont le positionnement mécanique est déterminé de façon à obtenir le diagramme de rayonnement voulu.

CONTEXTE DE L'INVENTION - ART ANTERIEUR

Lorsque l'on réalise une antenne à sources réparties, telle qu'une antenne réseau par exemple, un problème important à résoudre est constitué par la précision du positionnement mécanique relatif des différentes sources. Afin de détecter avec précision la présence de cibles dans l'espace d'observation, les antennes réseau ont besoin de recevoir le moins de puissance possible en dehors du lobe principal. Pour cela, les sources doivent être positionnées régulièrement et précisément sur l'antenne. Les mesures de diagramme de rayonnement $F(\theta)$, les mesures en champ proche en particulier, montrent que les erreurs mécaniques des antennes réseau, erreurs de positionnement des sources, sont des erreurs qui dégradent sensiblement les diagrammes de rayonnement. Cependant, les techniques actuelles de montage, et en particulier celles qui permettent un montage en série, plus ou moins automatisé, ne permettent pas d'obtenir une précision de positionnement suffisante pour que le diagramme de rayonnement ne soit pas significativement perturbé. Cette perturbation se traduit par l'apparition, de chaque côté du lobe principal, d'une quantité non-négligeable de lobes diffus dont le gain est suffisant pour altérer notablement les performances de l'antenne, notamment en terme de directivité. Le document intitulé "on the removal of blindness in phased antenna arrays by element positioning errors" divulgue une méthode de correction qui consiste à corriger la phase de certains éléments pour obtenir un diagramme correct même à certains angles où un nul peut apparaître.

PRESENTATION DE L'INVENTION

Un but de l'invention est de rendre possible, de manière pratique, la prise en compte de ces erreurs de positionnement de façon à en minimiser les effets sur les performances générales de l'antenne.

A cet effet l'invention a pour objet un procédé de compensation des erreurs de positionnement des éléments rayonnants d'une antenne réseau selon la revendication indépendante 1. Selon l'invention la fonction de correction $\Delta(n)$ a pour expression:

$$\Delta(n) = \sum_i \gamma(i) \cdot A_n(i) + (1 - \gamma(i)) \cdot \Phi_n(i)\,\gamma(i)$$

où $\gamma(i)$ représente une fonction de choix valant 1 ou 0.

Selon l'invention encore, a valeur de $y(i)$ est définie en fonction d'un seuil calculé à partir de l'angle de pointage $\theta_0$.

Selon une variante de mise en oeuvre le procédé selon l'invention comporte une étape complémentaire de pondération des composantes spectrales des fonctions $\Delta_a(n)$ et $\Delta_\varphi(n)$, la fonction de correction globale $\Delta(n)$ ayant alors pour expression :

$$\Delta(n) = \sum_i f(i) \cdot \gamma(i) \cdot A_n(i) + f(i) \cdot (1 - \gamma(i)) \cdot \Phi_n(i)\,\gamma(i)$$

Selon une variante de mise en oeuvre la pondération $f(i)$ suit une loi linéaire croissante en fonction de i.

Selon une autre variante de mise en oeuvre la pondération $f(i)$ suit une loi logarithmique croissante en fonction de i.

L'invention a également pour objet un procédé de formation du diagramme de rayonnement $F(\theta)$ d'une antenne réseau caractérisé en ce qu'il associe le procédé de correction selon l'invention à une étape de détermination de la loi de phase de pointage, permettant de réaliser le diagramme de rayonnement, à partir des positions réelles des éléments rayonnants.

DESCRIPTION DES FIGURES

Le principe de fonctionnement de l'invention, ainsi que ses avantages seront mieux compris à la lecture de la description qui suit, description faite au travers d'un exemple d'application non limitatif, et qui se réfère aux figures annexées qui présentent:

- la figure 1, un schéma représentant une antenne prise comme exemple pour la description du procédé selon l'invention,

- la figure 2, la courbe représentative du diagramme de rayonnement théorique idéal de l'antenne de la figure 1,

- la figure 3, la courbe représentative du diagramme de rayonnement réel d'une antenne du type de la figure 1 présentant une erreur sinusoïdale de positionnement des éléments rayonnants,

- la figure 4, la courbe représentative du diagramme de rayonnement réel d'une antenne du type de la figure 1 présentant l'erreur de positionnement de la figure 3, corrigé par modulation de phase des composantes spectrales de la fonction d'erreur de positionnement associée,

- la figure 5, la courbe représentative du diagramme de rayonnement réel d'une antenne du type de la figure 1 présentant l'erreur de positionnement de la figure 3, corrigé par modulation d'amplitude des composantes spectrales de la fonction d'erreur de positionnement associée,

- les figures 6 et 7, les courbes représentatives des diagrammes de rayonnement réel d'antennes du type de la figure 1 présentant des erreurs de positionnement quelconques,

- la figure 8, l'organigramme de principe du procédé de correction selon l'invention,

- la figure 9, les représentations graphiques d'exemples de lois d'évolution du seuil de sélection du type de correction, en fonction du pointage $\theta_0$,

- la figure 10, les représentations graphiques de deux lois de pondération des termes de correction appliqués aux composantes spectrales de la fonction d'erreur de positionnement.

## DESCRIPTION DETAILLEE

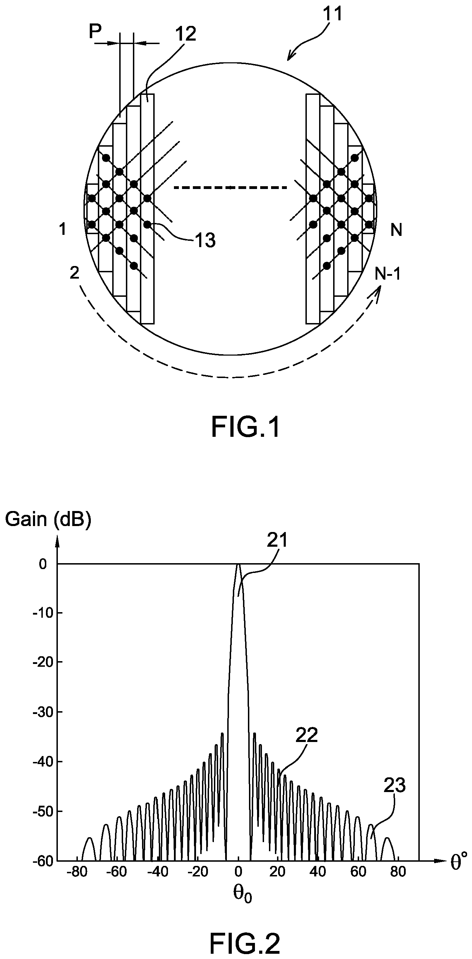

L'exemple utilisé pour décrire le procédé selon l'invention dans son principe, est celui d'une antenne telle que celle illustrée par la figure 1. Cette antenne 11 est constituée d'un ensemble de N poutres rayonnantes 12, chaque poutre comportant un ensemble de sources 13 alignées le long de l'axe de la poutre.

Les N poutres constituant l'antenne sont assemblées mécaniquement de façon à ce que les axes des poutres soient espacés les uns des autres d'une distance P constante, ou pas, de sorte que, les poutres étant assemblées, l'antenne ainsi constituée se présente comme un ensemble de sources, disposées en quinconce et équidistantes les unes des autres.

Un tel arrangement de sources permet, si le positionnement des sources les unes par rapport aux autres est suffisamment précis, d'obtenir un diagramme de rayonnement $F(\theta)$ semblable à celui présenté à la figure 2. Ce diagramme de rayonnement présente, pour une direction $\theta_0$ pointée par l'antenne, un lobe principal 21 orienté dans la direction $\theta_0$ et centré autour de $\theta_0$, et des lobes secondaires 22, 23, orientés dans des directions autres que la direction $\theta_0$, dont le niveau est significativement plus faible que celui du lobe principal, de l'ordre d'au moins quarante décibels au minimum.

Idéalement, pour une antenne constituée de sources identiques, espacées de manière rigoureusement constante, on obtient un diagramme de rayonnement $F_{idéal}$ pour lequel le niveau des lobes secondaires décroît sensiblement, de manière continue, à mesure que la direction $\theta$ considérée s'éloigne de la direction $\theta_0$ pointée par le lobe principal. On obtient ainsi par exemple pour des lobes 23 centrés sur une direction $\theta$ présentant un angle supérieur à 60° par rapport à la direction $\theta_0$, un niveau de lobe présentant un affaiblissement supérieur à 50 dB par rapport au niveau du lobe principal 21.

Dans la pratique, réaliser de manière simple une telle antenne idéale, s'avère difficile. En effet un positionnement précis des différentes sources suppose d'une part que sur chaque poutre les sources se trouvent correctement disposées et alignées, et que d'autre part les poutres soient assemblées les unes aux autres avec un espacement P rigoureusement constant. Or si l'alignement des sources sur une poutre, alignement qui résulte de la fabrication de la poutre rayonnante considérée, est assez facilement maîtrisable, l'assemblage des poutres entre elles avec un pas d'écartement sensiblement constant est généralement plus difficile à réaliser, du fait en particulier de la précision de positionnement. Une antenne assemblée présente donc généralement des défauts de positionnement des sources qui se traduisent par une altération du diagramme de rayonnement. Cette altération se traduit elle-même principalement par la présence sur le diagramme F(θ) de lobes secondaires de niveau relativement élevé. Ces lobes secondaires qui apparaissent pour certaines valeurs particulières de θ, ont un niveau sensiblement plus élevé que ceux des lobes secondaires présentés, pour les mêmes valeurs de θ, par le diagramme $F_{idéal}$. On obtient alors un diagramme de rayonnement $F_{perturbé}(θ)$.

La présence de lobes secondaires de fort niveau a pour conséquence fâcheuse d'altérer la directivité de l'antenne ainsi réalisée, cette altération de la directivité pouvant se traduire en particulier, pour un radar équipé d'une telle antenne, par une augmentation du niveau de fausse alarme.

Le procédé selon l'invention propose une solution pour corriger cette altération en appliquant au diagramme $F_{perturbé}(θ)$ un terme correctif variable ΔF. De la sorte il est avantageusement possible, selon l'invention, d'obtenir un diagramme d'éclairement $F_{corrigé}(θ)$ ayant pour expression générale:

$$F_{corrigé}(θ) = F_{perturbé}(θ) + ΔF(θ) \qquad [1]$$

Selon l'invention, le terme ΔF(θ) est déterminé de façon à ce que l'on obtienne après application du procédé, un diagramme $F_{corrigé}(θ)$ aussi proche que possible du diagramme $F_{idéal}(θ)$.

Dans le cas d'une antenne telle que celle de la figure 1, prise comme exemple non limitatif, le diagramme $F_{idéal}(θ)$ peut être défini par la relation suivante:

$$F_{idéal}(θ) = \sum_{n=1}^{N} a_n . e^{-j.k.n.P.(\sin θ - \sin θ_0)} \qquad [2]$$

dans laquelle $θ_0$ représente la direction pointée par l'antenne (direction du lobe principal de F(θ)) et P le pas d'implantation des poutres. Le facteur k est la constante de propagation de l'onde considérée. On rappelle ici que k est égale à 2π/λ, λ, étant la longueur d'onde du signal auquel est adapté l'antenne.

$F_{idéal}$ est ainsi défini pour chaque direction θ comme la somme des contributions, des diagrammes élémentaires relatifs à chacune des poutres rayonnantes composant l'antenne. Il se présente donc comme une somme de termes complexes de module $a_i$ et d'argument k.i.P.(sinθ - sin $θ_0$).

Si on considère une antenne réelle, pour laquelle le positionnement des poutres rayonnantes présente des imperfections, le diagramme $F_{perturbé}(θ)$ correspondant peut être défini de manière générale par la relation suivante:

$$F_{perturb}(θ) = \sum_{n=1}^{N_x} a_n . e^{-j.k.n.P.\sin θ_0} e^{(j.k.(n.P+δ_n)\sin θ)} \qquad [3]$$

dans laquelle $δ_n$ correspond pour la poutre de rang n à la valeur de l'erreur de position.

Par suite, pour obtenir un diagramme d'éclairement corrigé proche du diagramme idéal, il est possible d'appliquer à chaque terme de la somme de la relation [3] un facteur de correction Δ(n). La suite de la description présente la façon dont, selon l'invention, est déterminé ce facteur de correction.

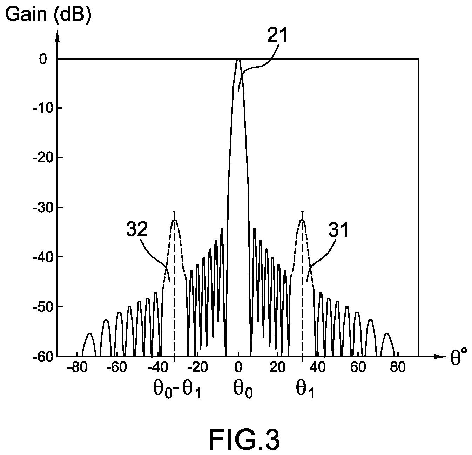

On s'intéresse à présent aux figures 3 à 5.

La figure 3 présente le diagramme de rayonnement obtenu avec une antenne dont les poutres présentent un défaut de positionnement particulier dont la valeur est une fonction sinusoïdale de la position de la poutre dans l'antenne. Ce type de défaut, par ailleurs théorique, permet avantageusement de comprendre le principe de correction proposé par l'invention.

Pour ce défaut particulier, l'erreur de positionnement de chacune des poutres peut être définie par la relation suivante:

$$\forall n \in [1, Nx], \ δ(n) = δ_n = δP \cdot \sin(nφ + φ_0) \qquad [4]$$

Les erreurs δ(n) constituent les composantes d'un vecteur qui sera appelé vecteur d'imperfections. Ce vecteur est chargé des erreurs de positionnement des poutres aux indices correspondants.

L'amplitude δP de l'erreur de position est ici considérée comme faible, de l'ordre de quelques pour cents de la valeur exacte du pas P, ce qui est généralement le cas dans la réalité.

Chaque erreur est par ailleurs considérée ici comme une erreur corrélée sur l'ensemble d'une poutre, le positionnement des sources sur la poutre étant supposé suffisamment précis pour ne pas contribuer significativement à la dégradation du diagramme d'éclairement. Il est ainsi possible d'étudier les perturbations occasionnées par ce défaut en raisonnant non pas sur le réseau de sources réel, à deux dimensions, mais sur un réseau linéaire de sources équivalent.

Comme on peut le constater en comparant la figure 3 à la figure 1, une telle perturbation des positions des éléments rayonnants a pour effet d'élever_le niveau de deux lobes secondaires particuliers 31 et 32, centrés sur des directions $\theta_0+\theta_1$ et $\theta_0-\theta_1$, symétriques l'un de l'autre par rapport au lobe principal centré sur $\theta_0$. La valeur de $\theta_1$ est par ailleurs liée au terme $\varphi_1$ du défaut de positionnement sinusoïdal $\delta(n)$ par la relation suivante:

$$u_1 = \varphi = k.P.(\sin(\theta_1) - \sin(\theta_0)) \qquad [5]$$

Le défaut de positionnement considéré ici génère ainsi une altération localisée qui ne modifie en rien l'allure du diagramme d'éclairement pour le reste du domaine d'observation. L'altération localisée en $\theta = \theta_1$ peut avantageusement être corrigée en appliquant la correction sélective appropriée.

Le diagramme de rayonnement $F(\theta)$ pouvant être représenté, selon la relation [3], comme une somme de termes complexes, il est possible d'appliquer une correction sélective portant uniquement sur le module ou bien sur l'argument, la phase, de chacun des termes. Par suite la valeur du terme de correction $\Delta F(\theta)$ vérifie alors la condition de compensation suivante relative à la direction $\theta_1$:

$$F_{corrigé}(\theta_1) = F_{perturbé}(\theta_1) + \Delta F(\theta_1) = F_{ideal}(\theta_1) \qquad [6]$$

On considère dans un premier temps le cas où la correction appliquée aux signaux reçus ou émis par chacune des poutres est une modulation de phase sinusoïdale $\Delta_\varphi(n)$ définie pour une poutre de rang n quelconque (n variant de 1 à N) par la relation suivante:

$$\Delta\varphi(n) = c.\sin(n.u_1 - \beta) = c \cdot \sin[n \cdot k \cdot P \cdot (\sin\theta_1 - \sin\theta_0) - \beta] \qquad [7]$$

dans laquelle $\theta_0$ est la direction pointée par l'antenne.
La variable $u_1$ est quant à elle définie par la relation suivante:

$$u_1 = k \cdot P \cdot (\sin\theta_1 - \sin\theta_0) \qquad [8]$$

Le diagramme de rayonnement $F_{perturbé}(\theta)$ correspondant à l'antenne réelle a pour expression:

$$F_{perturbé}(\theta) = \sum_{n=1}^{N} a_n . e^{-j.k.n.P.\sin\theta_0} e^{(j.k.(n.P+\delta_n)\sin\theta)} \qquad [9]$$

où l'expression de la perturbation $\delta_n$ est donnée par la relation [4].

D'autre part, le diagramme de rayonnement $F_{corrigé}(\theta)$ correspondant à l'antenne réelle dont on souhaite corriger les aberrations locales des lobes secondaires a pour expression:

$$F_{corrigé}(\theta) = \sum_{n=1}^{N} a_n . e^{-j.k.n.P.\sin\theta_0} e^{(j.k.(n.P+\delta_n)\sin\theta)} . e^{j\Delta_\varphi(n)} \qquad [10]$$

où l'expression de la correction $\Delta_\varphi(n)$ est donnée par la relation [7]

Si l'on considère d'une part que la correction $\Delta_\varphi(n)$ apportée doit rester faible devant $F(\theta)$ et d'autre part que, comme il a été dit précédemment, le terme $\delta_n$ est petit devant le pas P, il est possible de simplifier la relation [9] (développement limité à l'ordre 1 de $e^{j\Delta\varphi(n)}$) pour obtenir les relations suivantes:

$$F_{corrigé}(\theta) = \sum_{n=1}^{N} a_n \cdot e^{-j.k.n.P.\sin\theta_0} e^{(j.k.(n.P+\delta_n)\sin\theta)}$$

$$+ j \cdot \sum_{n=1}^{N} a_n \cdot \Delta_\varphi(n) \cdot e^{-j.k.n.P.\sin\theta_0} e^{(j.k.(n.P+\delta_n)\sin\theta)} \qquad [11]$$

$$F_{corrigé}(\theta) = F_{perturbé}(\theta)$$

$$+ j \cdot \sum_{n=1}^{N} a_n \cdot \Delta_\varphi(n) \cdot (1 + j \cdot k \cdot \delta_n \cdot \sin\theta) \cdot e^{j \cdot k \cdot n \cdot P \cdot (\sin\theta - \sin\theta_0)} \qquad [12]$$

$$F_{corrigé}(\theta) = F_{perturbé}(\theta)$$

$$+ j \cdot \sum_{n=1}^{N} a_n \cdot \Delta_\varphi(n) \cdot e^{j \cdot n \cdot u} + j \cdot \sum_{n=1}^{N} a_n \cdot \Delta_\varphi(n) \cdot j \cdot k \cdot \delta_n \cdot \sin\theta \cdot e^{j \cdot n \cdot u} \qquad [13]$$

où u est défini par la relation [5] N

Dans la relation [12], le dernier terme $j \cdot \sum_{n=1}^{N} a_n \cdot \Delta_\varphi(n) \cdot j \cdot k \cdot \delta_n \cdot \sin\theta \cdot e^{j \cdot n \cdot u}$ apparaît, en tant que produit de deux facteurs ($\delta_n$ et $\Delta_\varphi(n)$) de faible amplitude, comme négligeable devant les deux autres termes. Par suite le facteur de réseau $F_{corrigé}(\theta)$, ou diagramme de rayonnement corrigé, peut être défini en fonction de la variable u par la relation suivante:

$$F_{corrigé}(u) = F_{perturbé}(u) + j \cdot \sum_{n=1}^{N} a_n \cdot \Delta_\varphi(n) \cdot e^{j.n.u} \qquad [14]$$

ou, en remplaçant $\Delta_\varphi(n)$ par son expression littérale, par les relations :

$$F_{corrigé}(u) = F_{perturbé}(u) + j \cdot \sum_{n=1}^{N} a_n \cdot c \cdot \sin(n \cdot u_1 - \beta) \cdot e^{j.n.u} \qquad [15]$$

$$F_{corrigé}(u) = F_{perturbé}(u) + j \cdot \sum_{n=1}^{N} a_n \cdot c \cdot \frac{e^{j(n \cdot u_1 - \beta)} - e^{-j(n \cdot u_1 - \beta)}}{2j} \cdot e^{j.n.u} \qquad [16]$$

Par suite, ΔF(u) est alors défini par la relation suivante:

$$\Delta F(u) = \frac{c}{2} \cdot [e^{-j\beta} \cdot F_{idéal}(u + u_1) - e^{j\beta} \cdot F_{idéal}(u - u_1)] \qquad [17]$$

dans le cas particulier où $u = u_1$:

$$\Delta F(u_1) = F_{corrigé}(u_1) - F_{perturbé}(u_1) = \frac{c}{2} \cdot [e^{-j\beta} \cdot F_{idéal}(2u_1) - e^{j\beta} \cdot F_{idéal}(0)] \qquad [18]$$

ou encore, en considérant $F_{idéal}(2u_1)$ comme négligeable:

$$\Delta F(u_1) = -\frac{c}{2} \cdot e^{j\beta} \cdot F_{idéal}(0) \qquad [19]$$

où $F_{idéal}(0)$ représente la valeur de $F(u)$ pour $u$ correspondant à la direction pointée $\theta_0$

Par suite, en utilisant la condition sur $u_1$ de la relation [6] on obtient:

$$\Delta F(u_1) = F_{idéal}(u_1) - F_{perturbé}(u_1) = -\frac{c}{2} \cdot e^{j\beta} \cdot F_{idéal}(0)$$

et donc :

$$c = 2 \cdot \left| \frac{F_{perturbé}(u_1) - F_{idéal}(u_1)}{F_{idéal}(0)} \right| \qquad [20]$$

$$\beta = \arg\left( \frac{F_{perturbé}(u_1) - F_{idéal}(u_1)}{F_{idéal}(0)} \right) \qquad [21]$$

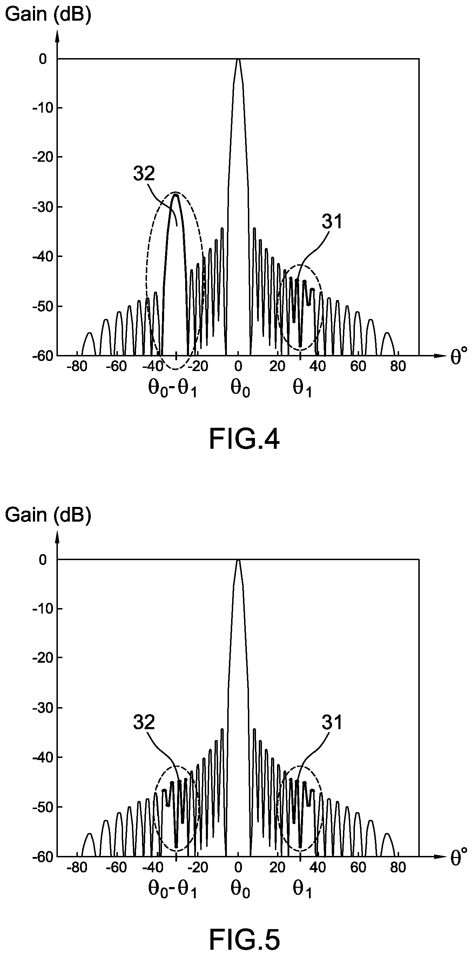

Ainsi comme le montrent les relations [20] et [21], il est possible de définir une fonction de correction de phase permettant de corriger les altérations du diagramme lorsque celles-ci résultent d'une erreur sinusoïdale de positionnement des poutres qui composent l'antenne considérée, cette erreur de positionnement se traduisant, comme l'illustre la figure 3, par une remontée de deux lobes secondaires pour les directions $\theta_0 + \theta_1$ et $\theta_0 - \theta_1$ Cependant, il faut noter que, comme on peut le constater sur la figure 4, lorsque la correction appliquée est une modulation de phase, cette correction a pour effet de supprimer le lobe secondaire parasite 31 initialement présent dans la direction $\theta_0 + \theta_1$, mais en même temps de renforcer le niveau du lobe secondaire 32 initialement présent dans la direction symétrique $\theta_0 - \theta_1$. Ce deuxième effet, indésirable, conduit à considérer un deuxième type de correction consistant à appliquer une correction d'amplitude.

On considère à présent le cas où la correction appliquée aux signaux reçus ou émis par chacune des poutres, est une modulation d'amplitude sinusoïdale $\Delta_a(n)$ définie pour une poutre de rang n quelconque (n variant de 1 à N) par la relation suivante:

$$\Delta_a(n) = c' \cdot \sin(n.u_1 - \beta') = c' \cdot \sin[n \cdot k \cdot P \cdot (\sin\theta_1 - \sin\theta_0) - \beta'] \qquad [22]$$

En appliquant un raisonnement analogue à celui utilisé dans le cas d'une correction de phase, on peut écrire:

$$F_{corrigé}(\theta) = \sum_{n=1}^{N} [a_n + \Delta_a(n)] \cdot e^{-j.k.n.P.\sin\theta_0} e^{(j.k.(n.P + \delta_n)\sin\theta)} \qquad [23]$$

Dès lors, en suivant un raisonnement analogue à celui mené précédemment, on établit la relation suivante:

$$\Delta F(u_1) = F_{idéal}(u_1) - F_{perturbé}(u_1) = -j \cdot \frac{c'}{2} \cdot e^{j\beta'} \cdot F_{idéal}(0) \qquad [24]$$

et on obtient :

$$c' = 2 \cdot \left| \frac{F_{perturbé}(u_1) - F_{idéal}(u_1)}{F_{idéal}(0)} \right| \qquad [25]$$

$$\beta' = \arg\left( j \frac{F_{perturbé}(u_1) - F_{idéal}(u_1)}{F_{idéal}(0)} \right) \qquad [26]$$

Ainsi les relations [25] et [26], permettent de définir une fonction de correction d'amplitude capable de corriger les altérations du diagramme lorsque celles-ci résultent d'une erreur sinusoïdale de positionnement des poutres. La correction apportée ici présente en outre l'avantage, comme l'illustre la figure 5, de supprimer la remontée de lobe secondaire parasite 31 initialement constatée présente dans la direction $\theta_0 + \theta_1$, mais également la remontée de lobe parasite 32 initialement constatée dans la direction symétrique $\theta_0 - \theta_1$.

Ainsi, comme on peut le constater au travers des paragraphes précédents, il est possible, dans le cas d'une antenne constituée de poutres rayonnantes et présentant un défaut sinusoïdal dans le positionnement des poutres, de déterminer une fonction de correction permettant de corriger les effets de ce défaut de positionnement. La correction appliquée au diagramme de rayonnement $F(\theta)$ de l'antenne est une correction sinusoïdale de phase ou d'amplitude.

Des simulations et des essais menés par la déposante montrent par ailleurs que, comme cela a déjà été évoqué, la correction par modulation d'amplitude du diagramme $F(\theta)$ apparaît, en particulier lorsque la différence $\theta_1 - \theta_0$ est faible, comme donnant les meilleurs résultats. Cette correction par modulation d'amplitude permet en effet, contrairement à la correction par modulation de phase, de supprimer à la fois le lobe parasite présent dans la direction $\theta_0 + \theta_1$, mais aussi le lobe parasite image présent dans la direction $\theta_0 - \theta_1$.

Cependant il faut noter que, l'application d'une correction consistant à moduler la phase de la loi d'éclairement n'est pas à exclure, car, des simulations faites pour des dépointages $\theta_0$ croissants, permettent de constater qu'une fois que le lobe image est défini pour une direction théorique telle que la différence $\theta_0 - \theta_1$ est supérieure à 90°, sa prise en compte n'est plus nécessaire, alors que parallèlement la correction par modulation de phase donne des résultats meilleurs que la correction par modulation d'amplitude. Ainsi, une correction optimale consiste à utiliser l'une ou l'autre correction en fonction du dépointage et de l'angle pour lequel apparaît un lobe secondaire parasite.

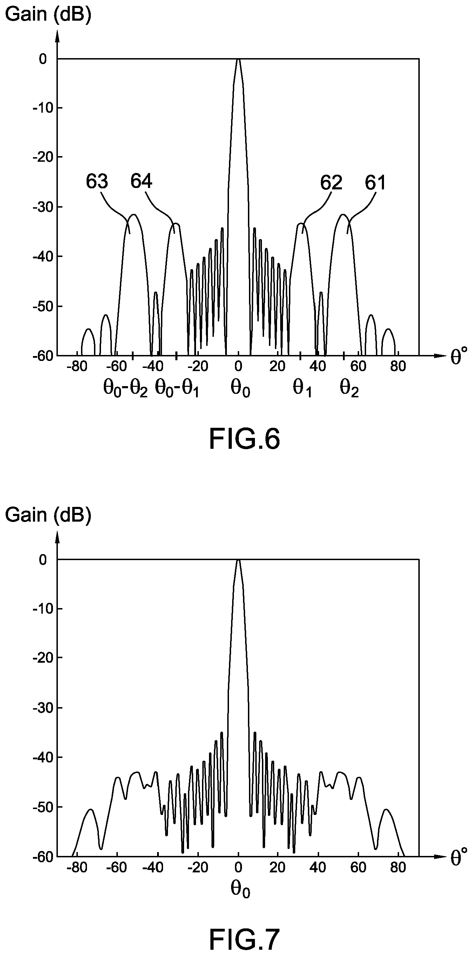

On s'intéresse ensuite aux figures 6 et 7 qui permettent d'exposer la manière de généraliser le principe de correction, décrit dans les paragraphes précédents, au cas d'un défaut de positionnement quelconque.

La figure 6 illustre le cas particulier où le défaut de positionnement des poutres peut être décrit comme une fonction somme de deux fonctions d'erreur sinusoïdales. Comme le montre la figure ce type de défaut occasionne la remontée de deux lobes secondaires 61 et 62 pour des directions $\theta_0 + \theta_1$ et $\theta_0 + \theta_2$ sur le diagramme de rayonnement $F(\theta)$, et des deux lobes symétriques 63 et 64 pour les directions $\theta_0 - \theta_1$ et $\theta_0 - \theta_2$.

Le cas illustré par la figure 6 reste d'interprétation assez simple, et on conçoit aisément que la méthode de correction décrite précédemment puisse s'appliquer de manière relativement directe à ce cas particulier. L'erreur de positionnement $\delta(n)$ de chacune des poutres peut alors être définie comme une combinaison linéaire de deux erreurs sinusoïdales, et peut donc être corrigée au moyen d'une fonction $\Delta_a(n)$ (ou $\Delta_\varphi(n)$) comportant un terme correcteur relatif à la première erreur et un terme relatif à la deuxième erreur.

La figure 7 illustre quant à elle le cas général où le défaut de positionnement ne peut être décrit de manière simple. On assiste dans ce cas à une déformation générale du diagramme de rayonnement, avec modification du niveau des lobes secondaires et diffus. Le niveau de certains lobes devient ainsi plus faible que dans le cas idéal, alors que le niveau de certains autres devient franchement plus élevé. Un tel diagramme ne permet pas de déterminer de manière simple l'expression de la fonction caractérisant l'erreur de positionnement et par suite, ne permet pas l'élaboration directe de la correction permettant de retrouver le diagramme $F_{idéal}(\theta)$ qui caractérise l'antenne idéale, réalisée sans erreur de positionnement.

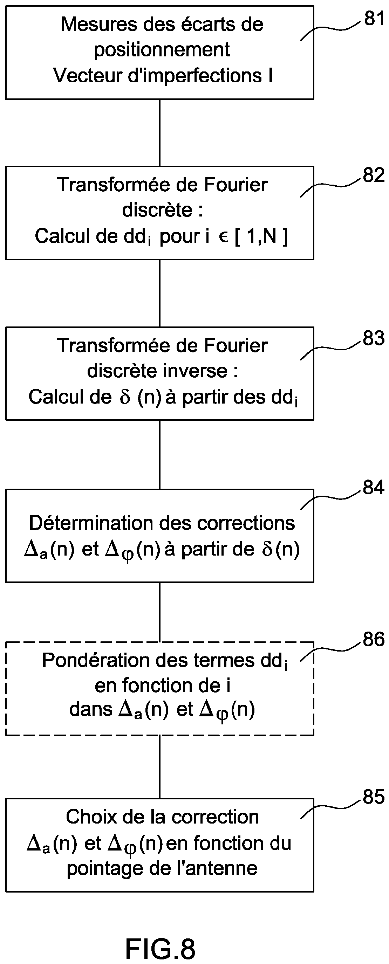

Le procédé selon l'invention propose une solution permettant de déterminer cette correction notamment dans le cas général où l'erreur de positionnement des poutres est une erreur aléatoire. La suite de la description présente les différentes étapes du procédé, résumées sur la figure 8.

Comme l'illustre la figure 8, le procédé selon l'invention comporte principalement 5 étapes.

La première étape 81 est une étape de mesure qui consiste, après assemblage des différents éléments rayonnants de l'antenne, à déterminer pour chaque élément l'écart existant entre la position théorique de l'élément et sa position réelle. Dans le cas de l'antenne constituée de poutres, prise comme exemple non limitatif dans la description, cette première étape consiste à mesurer l'erreur de positionnement de chaque poutre par rapport à sa position théorique. Ces écarts constituent les composantes d'un vecteur d'écart I mesuré, ou vecteur d'imperfections. Dans l'exemple d'une antenne constituée de N poutres rayonnantes le vecteur I comporte donc N composantes.

Comme on l'a vu précédemment, dans le cas général correspondant à la figure 7, l'erreur de positionnement $\delta(n)$ ne peut être décrite comme une simple fonction sinusoïdale du rang n de la poutre. Par suite, cette erreur se traduit non pas par la remontée du niveau d'un lobe particulier dans le diagramme $F(\theta)$, mais par une altération répartie sur tout le diagramme.

La seconde étape 82 et la troisième étape 83 du procédé selon l'invention ont pour objet de modéliser la fonction d'erreur de positionnement δ(n), connue par les mesures effectuées qui composent le vecteur I, par une fonction définie comme une somme d'erreurs sinusoïdales de périodes P, 2P...(N-1) P.

La seconde étape 82 procède à la décomposition spectrale de la fonction d'erreur. Cette décomposition est par exemple réalisée par l'application d'une transformée de Fourier discrète à la suite d'échantillons constituée des composantes du vecteur d'imperfections I. Cette transformation produit un nouveau vecteur dd de même longueur que le vecteur d'imperfections, et présentant une symétrie du fait du caractère réel des éléments composant le vecteur I traité. Les composantes $dd_i$ du vecteur dd sont définies par la relation suivante:

$$dd_i = \sum_{n=1}^{N} \delta(n).e^{\left(-j.2.\Pi.\frac{(i-1).(n-1)}{N}\right)} \qquad [27]$$

avec $i \in [1,N]$,

Les termes $dd_i$ ainsi obtenus représentent les composantes spectrales complexes de la fonction d'erreur dans le domaine spatial. Chaque composante spectrale représente elle-même une erreur sinusoïdale de période i, cette erreur pouvant être considérée comme responsable de la remontée d'un lobe secondaire particulier du diagramme F(θ).

La troisième étape 83 consiste quant à elle à effectuer la transformation inverse de celle effectuée lors de l'étape précédente. En effet, la transformée de Fourier inverse du vecteur dd redonne accès au vecteur d'imperfections I qui est alors écrit sous la forme d'une somme finie de sinusoïdes. On peut ainsi écrire:

$$\delta(n) = \frac{1}{N_x} \sum_{i=1}^{N} |dd_i|.cos(2.\Pi.\frac{(i-1).(n-1)}{N} + arg(dd_i)) \qquad [28]$$

avec $n \in [1,N]$

L'erreur δ(n) se présente ainsi comme une somme de perturbations sinusoïdales pouvant être compensées au moyen d'une fonction de correction se présentant comme une somme de modulations analogues aux fonctions $\Delta_a$(n) et $\Delta_\varphi$(n) décrites précédemment au moyen des relations [7] et [22] notamment. Cette somme de modulations compensera un par un les termes spectraux du vecteur d'imperfections.

La quatrième étape 84 consiste à déterminer l'expression des corrections théoriques d'amplitude $\Delta_a$(n) et de phase $\Delta_\varphi$(n), permettant de corriger l'erreur δ(n) définie par la relation [28].

Dans le cas d'une antenne telle que celle prise comme exemple, présentant un diagramme de rayonnement, ou facteur de réseau, F(θ), perturbé du fait d'erreurs de positionnement des poutres rayonnantes et pour un dépointage nul, la correction à appliquer à chaque composante sinusoïdale de l'erreur sera, comme on l'a vu précédemment, une correction par modulation de l'amplitude plutôt qu'une correction par modulation de phase. Par suite, le diagramme de rayonnement corrigé $F_{corrigé}$(θ), pourra être défini par la relation suivante:

$$F(\theta) = \sum_{n=1}^{N} a_n.(1 + 2\Pi.\Delta_a(n)).e^{(j.k.(n.P + \delta_n)sin\,\theta)} \qquad [29]$$

où $\Delta_a$(n) représente la fonction de correction globale.

Si l'on considère en outre que les erreurs de positionnement $\delta_n$ sont petites devant la distance P (pas) séparant deux éléments rayonnants du réseau, on peut alors appliquer un développement limité au terme $e^{jk\delta_n sin\theta}$. On obtient alors la relation suivante:

$$F(\theta) = \sum_{n=1}^{N} a_n.(1 + 2\Pi.\Delta_a(n)).(1 + j.k.\delta_n.sin\,\theta).e^{(j.k.n.P.sin\,\theta)} \qquad [30]$$

Par suite, en ne gardant que les termes du premier ordre, le terme de modulation étant aussi de petite amplitude, et en identifiant l'expression obtenue à celle du diagramme $F_{idéal}$(θ), on obtient la relation suivante :

$$\Delta_a(n) = -\frac{sin\,\theta}{\lambda}.j.\delta_n \qquad [31]$$

avec $n \in [1,N]$.

On constate donc sur cet exemple simple, par ailleurs généralisable, que $\Delta_a(n)$ est une fonction qui présente l'inconvénient de dépendre à la fois des erreurs de positionnement des différents éléments de l'antenne, et de la direction d'observation $\theta$ considérée, direction qui n'est pas un paramètre intrinsèque de l'antenne. De manière générale, cette double dépendance, rend complexe, voire impossible, la détermination d'une correction $\Delta_a(n)$ efficace au moyen de la relation [31].

Pour pallier cette difficulté tout en utilisant le principe de décomposition de la fonction d'erreur $\delta(n)$ en une somme d'erreurs de positionnement sinusoïdales, le procédé selon l'invention propose de substituer aux termes dépendants de l'angle $\theta$, un terme majorant. Ainsi, dans l'exemple précédent, on substitue à la relation [31] la relation suivante:

$$\Delta_a(n) = -\frac{1}{\lambda}.j.\delta_n \qquad [32]$$

La relation [32] correspond à une substitution, dans la relation [31] de l'expression $\sin\theta$ par la valeur maximale qu'elle peut prendre sur l'espace d'observation couvert par le diagramme $F(\theta)$ (de -90° à +90°), à savoir la valeur 1. De la sorte, l'expression de $\Delta_a(n)$ ne dépend plus que du seul paramètre n, qui représente l'élément d'antenne considéré. Cette maximalisation avantageuse qui permet de s'affranchir du paramètre $\sin\theta$, n'entraîne en outre aucune conséquence sensible sur la correction effectuée, dans la mesure où cette correction est de toute façon de faible valeur.

Par suite, selon l'invention, les composantes du vecteur d'imperfections I étant remplacées par celles du vecteur obtenu par la transformée inverse de la transformée de Fourier discrète de I, on peut écrire la relation suivante:

$$\Delta_a(n) = \frac{-1}{\lambda} \cdot \frac{1}{N} \cdot \sum_{i=1}^{N} |dd_i| \cdot \sin\left(\frac{2.\Pi.(n-1).(i-1)}{N} + \arg(dd_i)\right) \qquad [33]$$

avec $n \in [1, N]$.

Cette relation est déduite de la relation [28] dans laquelle les termes en "cosinus" deviennent des termes en "sinus" pour prendre en compte le facteur j de la relation [32].

Ainsi, selon l'invention, la détermination de la fonction de correction par modulation d'amplitude $\Delta_a(n)$ est réalisée de manière simple et indépendante de la direction d'observation $\theta$, à partir des composantes du vecteur obtenues par application d'une transformation de Fourier inverse dd. Cette détermination est encore facilitée par le caractère symétrique de la décomposition spectrale de l'erreur de positionnement, qui permet de ramener l'expression de $\Delta_a(n)$ à une somme de N' termes, N' étant égal à la partie entière du nombre (N/2+1) (i.e. N' = floor(N/2+1). On peut alors déterminer $\Delta_a(n)$ à l'aide de la relation suivante:

$$\Delta_a(n) = \frac{-2}{\lambda \cdot N} \cdot \sum_{i=1}^{N'} |dd_i| \cdot \sin\left(\frac{2.\Pi.(n-1).(i-1)}{N} + \arg(dd_i)\right) \qquad [34]$$

avec $n \in [1, N]$.

Finalement, pour un arrangement dans lequel, l'antenne étant constituée de poutres rayonnantes, l'espacement P entre poutres est sensiblement égal à la demi-longueur d'onde ($\lambda/2$) de fonctionnement, l'expression de $\Delta_a(n)$ est donnée par la relation suivante:

$$\Delta_a(n) = \frac{-1}{P \cdot N} \cdot \sum_{i=1}^{N'} |dd_i| \cdot \sin\left(\frac{2.\Pi.(n-1).(i-1)}{N_x} + \arg(dd_i)\right) \qquad [35]$$

avec $n \in [1, N]$.

Cette dernière relation approchée permet d'obtenir une expression de $\Delta_a(n)$ indépendante de la fréquence. Le domaine fréquentiel de fonctionnement de l'antenne étant généralement supérieur ou égal à 10% de la valeur de la fréquence centrale, la constante P, représentant la distance entre deux éléments rayonnants, est égale à peu près à la moitié de la longueur d'onde pour la fréquence la plus haute du domaine considéré. Elle constitue donc une bonne estimation de $\lambda$ pour approximer dans l'expression de la modulation le terme dépendant de la fréquence, et rendre ainsi le calcul de $\Delta_a(n)$ indépendant de la fréquence.

Le procédé selon l'invention permet de la même façon de déterminer une expression de la fonction de correction par modulation de la phase, indépendante à la fois de la direction d'observation θ et de la longueur d'onde λ. Le diagramme $F_{corrigé}(\theta)$ a alors pour expression:

$$F(\theta) = \sum_{n=1}^{N} a_n \cdot e^{(j.k.(n.P+\delta_n)\sin\theta)} \cdot e^{j\Delta_\varphi(n)} \qquad [36]$$

Par le même cheminement que précédemment, en opérant un développement limité sur l'exponentielle $e^{j\Delta\varphi(n)}$ contenant la modulation de phase (supposée de petite amplitude), on trouve l'expression de la modulation de phase, dont l'expression, très proche de celle de la modulation d'amplitude, est donnée par la relation suivante :

$$\Delta_\varphi(n) = \frac{1}{P \cdot N} \cdot \sum_{i=1}^{N'} \cdot |dd_i| \cdot \cos\left(\frac{2.\Pi.(n-1).(i-1)}{N} + \arg(dd_i)\right) \qquad [37]$$

avec $n \in [1, N]$.

La cinquième étape 85, consiste à effectuer la détermination automatique du type de corrections à appliquer aux différentes composantes de $F(\theta)$ en fonction du dépointage de l'antenne. Cette étape est nécessaire pour appliquer celle des corrections qui est la plus appropriée. En effet, comme on l'a vu précédemment, la correction par modulation d'amplitude est celle qui donne les meilleurs résultats lorsque l'angle de dépointage du diagramme de rayonnement est faible. Dans ce cas, la correction par modulation de phase a pour effet, comme l'illustre la figure 4 de relever le niveau du lobe secondaire image 42. En revanche, lorsque le dépointage est important, le lobe image disparaît du domaine visible, et la correction par modulation de phase du lobe parasite s'avère plus performante. Il est donc intéressant d'appliquer de manière sélective sur une composante spectrale de rang i donné, telle correction plutôt que telle autre. Par suite, le problème se pose de déterminer de manière automatique, en fonction du dépointage considéré, quelle type de correction appliquer à une composante donnée. Le traitement effectué à cette étape du procédé permet avantageusement de résoudre ce problème.

Le principe du traitement effectué lors de cette cinquième étape consiste à introduire dans l'expression des fonctions de correction $\Delta_a(n)$ et $\Delta_\varphi(n)$ une fonction binaire $\gamma(i)$ prenant la valeur 0 ou 1 en fonction du dépointage. Les corrections ont alors pour expression:

$$\Delta'_a(n) = \frac{-1}{P \cdot N} \cdot \sum_{i=1}^{N'} \gamma(i) \cdot |dd_i| \cdot \sin\left(\frac{2.\Pi.(n-1).(i-1)}{N} + \arg(dd_i)\right) \qquad [38]$$

et

$$\Delta_\varphi(n) = \frac{1}{P \cdot N} \cdot \sum_{i=1}^{N'} (1-\gamma(i)) \cdot |dd_i| \cdot \cos\left(\frac{2.\Pi.(n-1).(i-1)}{N} + \arg(dd_i)\right) \qquad [39]$$

Selon l'invention, la valeur de la fonction $\gamma(i)$ peut être définie par rapport à un seuil de référence $k_0$ entier, dont la valeur varie de façon décroissante en fonction du dépointage considéré. $\gamma(i)$ est également définie de façon à ce que, au fur et à mesure que le dépointage augmente pour les composantes spectrales d'ordre i élevé, composantes qui ont pour effet de faire apparaître des lobes parasites dans des directions $\theta_1$ éloignées de la direction de pointage $\theta_0$, la correction par modulation de phase soit préférée, du fait que le lobe parasite image n'est dans ce cas plus présent dans le domaine visible. Ainsi, en choisissant judicieusement le seuil $k_0$, la fonction $\gamma(i)$ peut par exemple être définie de manière simple, pour tout i compris entre 1 et N', par l'expression suivante: " Si $i \le k_0$ alors $\gamma(i) = 1$, sinon $\gamma(i) = 0$."

Selon l'invention, le seuil $k_0$ varie théoriquement de 0 au nombre N' de termes de modulation composant la fonction de correction considérée. En pratique, on exclut les valeurs proches des extrêmes en définissant un seuil bas, et éventuellement un seuil haut. En effet, une valeur extrême conduit à un type de correction unique, ce qui enlève tout intérêt à cette cinquième étape.

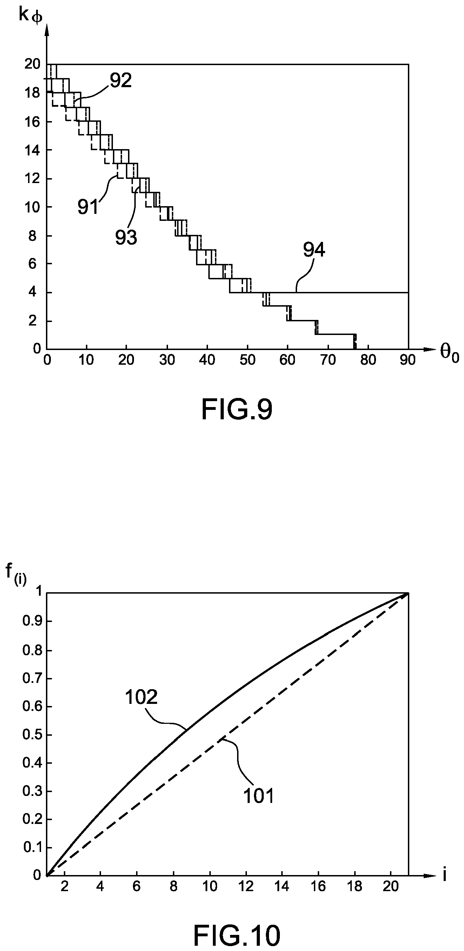

La figure 9 illustre, à titre d'exemple, l'évolution du seuil $k_0$ en fonction de la valeur du dépointage $\theta_0$, dans le cas particulier où $k_0$ est défini de manière analytique par la relation suivante:

$$k_0 = floor\left(\frac{N \cdot P}{\lambda}.(1 - |\sin\theta_0|) + 0.5\right) \qquad [40]$$

où "floor" représente la fonction partie entière.

Cette relation fait dépendre la valeur de $k_0$ de l'angle de dépointage $\theta_0$, et du rapport de la taille de l'antenne (donnée par le terme N.P) à la longueur d'onde de travail $\lambda$.

Sur la figure 9, les courbes pointillées 91, 92 et 93 représentent l'évolution de $k_0$, calculé à partir de la relation [40], pour trois valeurs distinctes de $\lambda$, tandis que la courbe en trait plein 94 représente une loi d'évolution bâtie de manière empirique à partir des courbes précédentes, et ajustée en tenant compte de résultats de simulation, résultats qui montrent en particulier que la variation de $\lambda$ dans une plage raisonnable n'a pas une influence significative sur l'efficacité de la correction apportée.

La définition de $k_0$ à partir de la formule analytique [40] n'est pas optimale, en ce sens qu'elle rend $k_0$ dépendant de la fréquence, ce qui a pour conséquence d'altérer notablement la solution aux bornes de l'intervalle de fréquence considéré ; par contre, elle donne une bonne idée de l'allure générale que la fonction doit embrasser et permet un affinage empirique, au moyen de résultats de simulation par exemple.

Le type de correction à appliquer aux différentes composantes de F($\theta$) étant ainsi déterminé, la fonction de correction d'erreur appliquée peut être décrite, selon l'invention, par la relation suivante:

$$\Delta(n) = \Delta_a^{'}(n) + \Delta_{\varphi}^{'}(n) \qquad [41]$$

A l'issue de ces cinq étapes, le procédé selon l'invention permet donc d'appliquer au diagramme de rayonnement réel correspondant à une antenne dont certains éléments rayonnants présentent des erreurs de positionnement, une correction qui se présente avantageusement comme une somme de corrections élémentaires, chaque correction ayant pour objet de corriger les effets d'une composante particulière de la fonction d'erreur de positionnement $\delta(n)$.

Les résultats de simulations réalisées par la déposante montrent en outre que la correction globale ainsi déterminée montre son efficacité, en particulier dans un domaine de pointage $\theta_0$ limité, s'étendant typiquement sur 25° autour de l'axe de l'antenne correspondant à un pointage $\theta_0$ nul. Cependant, pour les pointages relativement éloignés, cette correction s'accompagne d'une certaine altération du niveau des lobes secondaires proches du lobe principal, altération qui peut par exemple se traduire par une élévation, de l'ordre de 3 dB, des trois premiers lobes secondaires de F($\theta$).

Pour améliorer l'efficacité de la correction appliquée, le procédé selon l'invention peut être complété, dans le cas où cela s'avère nécessaire, par une étape intermédiaire 86, qui prend place entre la quatrième étape 84 et la cinquième étape 85. L'étape consiste à limiter la dégradation constatée sur les premiers lobes secondaires, notamment dans le cas de pointages élevés. Cette étape intermédiaire 86 consiste principalement à appliquer aux fonctions de correction $\Delta_a(n)$ et $\Delta_{\varphi}(n)$ déterminées à l'issue de l'étape 84, une loi de pondération f(i) des composantes spectrales, dont le rôle consiste à appliquer une correction faible aux composantes d'indices i faibles et d'appliquer aux autres composantes une correction dont la valeur croît avec l'indice. Ainsi, les lobes secondaires proches, correspondant à des erreurs de fréquence spatiale faible, seront peu affectés par la correction appliquée, alors que les lobes secondaires plus lointains seront effectivement corrigés. Pour réaliser cette correction, il est possible d'utiliser diverses lois. La figure 10 donne une représentation graphique de deux lois $f_1(i)$ et $f_2(i)$ prises comme exemples non limitatifs. Ces lois, représentées par les courbes 101 et 102, sont respectivement definies, pour i $\in$ [1, N'], par les relations suivantes:

$$f_1(i) = \frac{i-1}{N'} \qquad [42]$$

et

$$f_2(i) = \ln\left(1 + 1{,}72 \cdot (i-1)/N'\right) \qquad [43]$$

A l'issue de cette étape, on obtient ainsi des fonctions de correction dont les expressions sont les suivantes:

$$\Delta_a^{'}(n) = \frac{-1}{P \cdot N} \cdot \sum_{i=1}^{N'} f(i) \cdot \gamma(i) \cdot |dd_i| \cdot \sin\left(\frac{2.\Pi.(n-1).(i-1)}{N} + \arg(dd_i)\right) \qquad [44]$$

et

$$\Delta_\varphi(n) = \frac{1}{P \cdot N} \cdot \sum_{i=1}^{N'} f(i) \cdot (1 - \gamma(i)) \cdot |dd_i| \cdot \cos\left(\frac{2.\Pi.(n-1).(i-1)}{N} + \arg(dd_i)\right) \quad [45]$$

L'étape 85 de choix de la correction est alors mise en oeuvre sur ces fonctions pondérées.

L'efficacité du procédé selon l'invention, tel qu'il vient d'être décrit, peut par ailleurs avantageusement être accrue en prenant en compte le vecteur des imperfections de positionnement I, pour établir la loi de phase à appliquer aux différents éléments rayonnants pour former le diagramme $F(\theta)$ souhaité. En effet, si le calculateur responsable du calcul de la loi de phase à appliquer pour provoquer le pointage de l'antenne dans une direction $\theta_0$, n'a pas connaissance des imperfections de positionnement des éléments rayonnants, le calcul de cette loi de phase est effectué avec des valeurs de position erronées. Dès lors la fonction de correction $\Delta(n)$ déterminée pour le pointage $\theta_0$ n'est plus adaptée à la correction du diagramme de rayonnement réel. La correction appliquée perd ainsi de son efficacité, en particulier pour les pointages dont la direction est éloignée de l'axe de l'antenne.

Des simulations réalisées par la déposante montrent qu'en prenant en compte les erreurs de positionnement des éléments rayonnants dans le calcul de la loi de phase appliquée à ces éléments, on augmente sensiblement le domaine de pointage, typiquement jusqu'à $\pm 60°$ autour de $\theta_0$, pour lequel la correction par le procédé selon l'invention est efficace.

Pour des raisons de clarté de la description, le procédé selon l'invention a été présenté au travers d'un exemple particulier d'antenne formée de poutres rayonnantes, et pour laquelle les erreurs de positionnement se réduisent à de simples erreurs monodimensionnelles d'espacement des poutres sur un axe. Cet exemple particulier, non limitatif de la portée de l'invention, permet d'exposer le cas simple dans lequel les erreurs de positionnement constituent un vecteur d'imperfections I dont les composantes sont des grandeurs scalaires. Ainsi, l'exposé des différentes étapes du procédé n'est pas obscurci par l'emploi de formules générales complexes et non nécessaire à l'exposé du principe de l'invention. Le procédé selon l'invention est bien évidemment applicable à d'autres configurations d'antennes pour lesquelles se pose le problème des défauts de positionnement des éléments rayonnant par rapport à des positions théoriques données.

**Revendications**

1. Procédé pour déterminer une fonction de correction permettant de compenser les erreurs de positionnement des éléments rayonnants (13) d'une antenne réseau, celle-ci comportant N poutres, **caractérisé en ce qu'**il comporte au moins:

   - une première étape (81) de mesure de l'erreur $\delta(n)$ de positionnement de chacun des N poutres (12) et de constitution d'un vecteur d'imperfections I, dont les N composantes sont les valeurs $\delta(n)$ de l'erreur de positionnement,
   - une deuxième étape (82) de décomposition spectrale de la fonction d'erreur $\delta(n)$ par application d'une transformée de Fourier au vecteur d'imperfections I, la décomposition spectrale prenant la forme d'un vecteur dd(i) défini par la relation:

$$dd_i = \sum_{n=1}^{N} \delta(n).e^{(-j.2.\Pi.\frac{(i-1).(n-1)}{N})}$$

   avec $i \in [1,N]$
   - une troisième étape (83) de recomposition de la fonction d'erreur $\delta(n)$ à partir du vecteur dd(i) obtenu à l'issu de l'étape précédente, cette recomposition qui restitue le vecteur d'imperfection I étant réalisée par application d'une transformée de Fourier inverse au vecteur dd, chaque composante $\delta(n)$ du vecteur i étant définis sous la forme d'une somme de composantes sinusoïdales $E_n(i)$, par la relation:

$$\delta(n) = \frac{1}{N_x} \sum_{i=1}^{N} |dd_i|.\cos(2.\Pi.\frac{(i-1).(n-1)}{N} + \arg(dd_i))$$

   avec $n \in [1,N]$
   - une quatrième étape (84) de détermination, pour chaque composante $\delta(n)$ du vecteur I, de fonctions de corrections d'amplitude, $\Delta_a(n)$, et de phase, $\Delta_\varphi(n)$, définies respectivement à partir de $\delta(n)$ comme des sommes de composantes spectrales sinusoïdales, par les relations suivantes:

$$\Delta_a(n) = \frac{-1}{\lambda} \cdot \frac{1}{N} \cdot \sum_{i=1}^{N} |dd_i| \cdot \sin\left(\frac{2.\Pi.(n-1).(i-1)}{N} + \arg(dd_i)\right)$$

et

$$\Delta_\varphi(n) = \frac{-1}{\lambda} \cdot \frac{1}{N} \cdot \sum_{i=1}^{N} |dd_i| \cdot \cos\left(\frac{2.\Pi.(n-1).(i-1)}{N} + \arg(dd_i)\right)$$

avec $n \in [1, N]$;

- une cinquième étape (85) de validation des composantes de chacun des termes des fonctions $\Delta_a(n)$ et $\Delta_\varphi(n)$ par une fonction de choix $\gamma_i$ représente une fonction valant 0 ou 1 en fonction de la valeur du dépointage $\theta_0$ de l'antenne, de façon à obtenir des fonctions de correction $\Delta'_a(n)$ et $\Delta'_\varphi(n)$ définies par les relations suivantes:

$$\Delta'_a(n) = \frac{-1}{\lambda} \cdot \frac{1}{N} \cdot \sum_{i=1}^{N} \gamma_i \cdot |dd_i| \cdot \sin\left(\frac{2.\Pi.(n-1).(i-1)}{N} + \arg(dd_i)\right)$$

et

$$\Delta'_\varphi(n) = \frac{-1}{\lambda} \cdot \frac{1}{N} \cdot \sum_{i=1}^{N} (1-\gamma_i) \cdot |dd_i| \cdot \cos\left(\frac{2.\Pi.(n-1).(i-1)}{N} + \arg(dd_i)\right)$$

la fonction de correction globale $\Delta(n)$ correspondant à chaque composante $\delta(n)$, étant défini par la relation:

$$\Delta_n = \Delta'_a(n) + \Delta'_\varphi(n).$$

- une sixième étape qui consiste à appliquer la fonction de correction de manière à compenser les erreurs de positionnement des éléments rayonnants d'une antenne réseau.

2. Procédé selon la revendication 1, dans lequel la valeur de $\gamma(i)$ est définie en fonction d'un seuil $K_0$ calculé à partir de l'angle de pointage $\theta_0$, dont la valeur varie de façon décroissante en fonction $\theta_0$; $\gamma(i)$ valant 1 quand i est inférieur ou égal à $k_0$ et 0 quand i est supérieur à $k_0$.

3. Procédé selon l'une des revendications 1 ou 2, comportant une étape complémentaire (86) de pondération des composantes des fonctions $\Delta_a(n)$ et $\Delta_\varphi(n)$ par une fonction f(i), les fonctions de correction $\Delta'_a(n)$ et $\Delta'_\varphi(n)$ étant alors définies par les relations suivantes:

$$\Delta'_a(n) = \frac{-1}{\lambda} \cdot \frac{1}{N} \cdot \sum_{i=1}^{N} f(i) \cdot \gamma_i \cdot |dd_i| \cdot \sin\left(\frac{2.\Pi.(n-1).(i-1)}{N} + \arg(dd_i)\right)$$

et

$$\Delta'_\varphi(n) = \frac{-1}{\lambda} \cdot \frac{1}{N} \cdot \sum_{i=1}^{N} f(i) \cdot (1-\gamma_i) \cdot |dd_i| \cdot \cos\left(\frac{2.\Pi.(n-1).(i-1)}{N} + \arg(dd_i)\right).$$

**EP 1 835 301 B1**

**4.** Procédé selon la revendication 3, dans lequel la pondération f(i) suit une loi linéaire croissante en fonction de i.

**5.** Procédé selon la revendication 3, dans lequel la pondération f(i) suit une loi logarithmique croissante en fonction de i.

**6.** Procédé pour former un diagramme de rayonnement $F_{idéal}(\theta)$ donné à partir du diagramme réel $F_{perturbé}(\theta)$ d'une antenne réseau du type comportant des éléments rayonnants constitués de poutres chaque poutre comportant un ensemble de sources, chaque poutre présentant un écart de positionnement par rapport à un positionnement théorique selon un pas P, **caractérisé en ce qu'**il comporte:

une première étape consistant à mesurer la position réelle de chaque élément rayonnant,
une seconde étape consistant à mettre en oeuvre le procédé selon l'une quelconque des revendications 1 à 6, l'erreur de position δ(n) de chaque élément étant calculée à partir de la position théorique de cet élément sur l'antenne et de la position réelle de cet élément mesuré à l'étape précédente;
une troisième étape consistant à corriger le diagramme de rayonnement réellement réalisé au moyen de la fonction de correction Δ(n) obtenue à l'issue de la deuxième étape.

**Patentansprüche**

**1.** Verfahren zum Bestimmen einer Korrekturfunktion, mit der Positionierungsfehler von Strahlungselementen (13) einer Gruppenantenne kompensiert werden können, die N Träger umfasst, **dadurch gekennzeichnet, dass** es wenigstens die folgenden Schritte beinhaltet:

- einen ersten Schritt (81) des Messens des Positionierungsfehlers δ(n) jedes der N Träger (12) und des Bildens eines Imperfektionsvektors I, dessen N Komponenten die Werte δ(n) des Positionierungsfehlers sind,
- einen zweiten Schritt (82) des spektralen Zerlegens der Fehlerfunktion δ(n) durch Anwenden einer Fourier-Transformation auf den Imperfektionsvektor I, wobei die spektrale Zerlegung die Form eines Vektors dd(i) annimmt, definiert durch die Relation:

$$dd_i = \sum_{n=1}^{N} \delta(n).e^{(-j.2.\Pi.\frac{(i-1).(n-1)}{N})}$$

wobei i ∈ [1,N] ist;
- einen dritten Schritt (83) des erneuten Zusammensetzens der Fehlerfunktion δ(n) auf der Basis des nach dem vorherigen Schritt erhaltenen Vektors dd(i), wobei dieses erneute Zusammensetzen, das den Imperfektionsvektor I wiederherstellt, durch Anwenden einer inversen Fourier-Transformation auf den Vektor dd realisiert wird, wobei jede Komponente δ(n) des Vektors i in Form einer Summe von sinusförmigen Komponenten $E_n(i)$ durch die folgende Relation definiert wird:

$$\delta(n) = \frac{1}{N_x} \sum_{l=1}^{N} |dd_i|.\cos(2.\Pi.\frac{(i-1).(n-1)}{N} + arg(dd_i))$$

wobei n ∈ [1,N] ist;
- einen vierten Schritt (84) des Feststellens, für jede Komponente δ(n) des Vektors I, von Korrekturfunktionen für Amplitude Δa(n) und Phase $\Delta_\varphi(n)$, jeweils definiert auf der Basis von δ(n) als die Summe von sinusförmigen Spektralkomponenten, durch die folgenden Relationen:

$$\Delta_a(n) = \frac{-1}{\lambda}.\frac{1}{N}.\sum_{l=1}^{N} |dd_i| \cdot \sin\left(\frac{2.\Pi.(n-1).(i-1)}{N} + arg(dd_i)\right)$$

und

**15**

$$\Delta_\varphi(n) = \frac{-1}{\lambda} \cdot \frac{1}{N} \cdot \sum_{i=1}^{N} |dd_i| \cdot \cos\left(\frac{2.\Pi.(n-1).(i-1)}{N} + \arg(dd_i)\right)$$

wobei n ∈ [1, N] ist;

- einen fünften Schritt (85) des Validierens von Komponenten von jedem der Terme der Funktionen $\Delta_a(n)$ und $\Delta_\varphi(n)$ durch eine Auswahlfunktion $y_i$, die eine Funktion mit dem Wert 0 oder 1 in Abhängigkeit vom Entorientierungswert $\theta_0$ der Antenne repräsentiert, um Korrekturfunktionen $\Delta'_a(n)$ und $\Delta'_\varphi(n)$ zu erhalten, definiert durch die folgenden Relationen:

$$\Delta'_a(n) = \frac{-1}{\lambda} \cdot \frac{1}{N} \cdot \sum_{i=1}^{N} \gamma_i \cdot |dd_i| \cdot \sin\left(\frac{2.\Pi.(n-1).(i-1)}{N} + \arg(dd_i)\right)$$

und

$$\Delta'_\varphi(n) = \frac{-1}{\lambda} \cdot \frac{1}{N} \cdot \sum_{i=1}^{N} (1-\gamma_i) \cdot |dd_i| \cdot \cos\left(\frac{2.\Pi.(n-1).(i-1)}{N} + \arg(dd_i)\right)$$

wobei die globale Korrekturfunktion $\Delta(n)$ jeder Komponente $\delta(n)$ entspricht, definiert durch die Relation:

$$\Delta_n = \Delta'_a(n) + \Delta'_\varphi(n),$$

- einen sechsten Schritt, bestehend aus dem Anwenden der Korrekturfunktion, um die Positionierungsfehler der Strahlungselemente einer Gruppenantenne zu kompensieren.

2. Verfahren nach Anspruch 1, bei dem der Wert von $\gamma(i)$ in Abhängigkeit von einer Schwelle $K_0$ definiert wird, berechnet auf der Basis des Orientierungswinkels $\theta_0$, dessen Wert absteigend in Abhängigkeit von $\theta_0$ variiert; wobei $\gamma(i)$ einen Wert von 1 hat, wenn i gleich oder kleiner als $k_0$ ist, und von 0, wenn i größer als $k_0$ ist.

3. Verfahren nach Anspruch 1 oder 2, das einen komplementären Schritt (86) des Gewichtens von Komponenten der Funktionen $\Delta_a(n)$ und $\Delta_\varphi(n)$ durch eine Funktion f(i) beinhaltet, wobei die Korrekturfunktionen $\Delta'_a(n)$ und $\Delta'_\varphi(n)$ durch die folgenden Relationen definiert werden:

$$\Delta'_a(n) = \frac{-1}{\lambda} \cdot \frac{1}{N} \cdot \sum_{i=1}^{N} f(i) \cdot \gamma_i \cdot |dd_i| \cdot \sin\left(\frac{2.\Pi.(n-1).(i-1)}{N} + \arg(dd_i)\right)$$

und

$$\Delta'_\varphi(n) = \frac{-1}{\lambda} \cdot \frac{1}{N} \cdot \sum_{i=1}^{N} f(i) \cdot (1-\gamma_i) \cdot |dd_i| \cdot \cos\left(\frac{2.\Pi.(n-1).(i-1)}{N} + \arg(dd_i)\right)$$

4. Verfahren nach Anspruch 3, bei dem die Gewichtung f(i) einem linearen Gesetz folgt, das in Abhängigkeit von i zunimmt.

5. Verfahren nach Anspruch 3, bei dem die Gewichtung f(i) einem logarithmischen Gesetz folgt, das in Abhängigkeit von i zunimmt.

6. Verfahren zum Bilden eines gegebenen Strahlungsdiagramms $F_{ideal}(\theta)$ auf der Basis des wirklichen Diagramms $F_{gestört}(\theta)$ einer Gruppenantenne des Typs mit Strahlungselementen, die von Trägern gebildet werden, wobei jeder Träger einen Satz von Quellen umfasst, wobei jeder Träger eine Positionsabweichung mit Bezug auf eine theoretische Positionierung gemäß einem Schritt P aufweist, **dadurch gekennzeichnet, dass** es Folgendes beinhaltet:

einen ersten Schritt, bestehend aus dem Messen der wirklichen Position jedes Strahlungselements,
einen zweiten Schritt, bestehend aus dem Ausführen des Verfahrens nach einem der Ansprüche 1 bis 6, wobei der Positionsfehler $\delta(n)$ jedes Elements auf der Basis der theoretischen Position dieses Elements auf der Antenne und der wirklichen Position dieses Elements wie im vorherigen Schritt gemessen berechnet wird;
einen dritten Schritt, bestehend aus dem Korrigieren des Strahlungsdiagramms, wirklich realisiert mit Hilfe der nach dem zweiten Schritt erhaltenen Korrekturfunktion $\Delta(n)$.

**Claims**

1. A process for determining a correction function that makes it possible to compensate for the positioning errors of the radiating elements (13) of a network antenna, the latter comprising N beams, **characterised in that** it comprises at least:

- a first step (81) of measuring the positioning error $\delta(n)$ of each of the N beams (12) and compiling an imperfections vector I, the N components of which are the values $\delta(n)$ of the positioning error,
- a second step (82) of spectral decomposition of the error function $\delta(n)$ by applying a Fourier transform to the imperfections vector I, the spectral decomposition taking the form of a vector dd(i) defined by the relation:

$$dd_i = \sum_{n=1}^{N} \delta(n).e^{\left(-j.2.\Pi.\frac{(i-1).(n-1)}{N}\right)}$$

with $i \in [1,N]$
- a third step (83) of recomposing the error function $\delta(n)$ on the basis of the vector dd(i) obtained after the preceding step, this re-composition that restores the imperfections vector I being implemented by applying an inverse Fourier transform on the vector dd, each component $\delta(n)$ of the vector i being defined in the form of a sum of sinusoidal components $E_n(i)$ by the relation:

$$\delta(n) = \frac{1}{N_x} \sum_{i=1}^{N} |dd_i|.\cos\left(2.\Pi.\frac{(i-1).(n-1)}{N} + \arg(dd_i)\right)$$

with $n \in [1,N]$
- a fourth step (84) of determining, for each component $\delta(n)$ of the vector 1 , correction functions of amplitude, $\Delta_a(n)$, and of phase, $\Delta_\varphi(n)$, defined respectively on the basis of $\delta(n)$ as sums of sinusoidal spectral components, by the following relations:

$$\Delta_a(n) = \frac{-1}{\lambda}.\frac{1}{N} \sum_{i=1}^{N} |dd_i| \cdot \sin\left(\frac{2.\Pi.(n-1).(i-1)}{N} + \arg(dd_i)\right)$$

and

$$\Delta_\varphi(n) = \frac{-1}{\lambda}.\frac{1}{N} \sum_{i=1}^{N} |dd_i| \cdot \cos\left(\frac{2.\Pi.(n-1).(i-1)}{N} + \arg(dd_i)\right)$$

with $n \in [1,N]$ ;
- a fifth step (85) of validating the components of each of the terms of the functions $\Delta_a(n)$ and $\Delta_\varphi(n)$ by a chosen function $\gamma_i$ that represents a function that is worth 0 or 1 as a function of the de-pointing value $\theta_0$ of the antenna such as to obtain correction functions $\Delta'_a(n)$ and $\Delta'_\varphi(n)$ defined by the following relations:

$$\Delta'_{a}(n) = \frac{-1}{\lambda} \cdot \frac{1}{N} \cdot \sum_{i=1}^{N} \gamma_i \cdot |dd_i| \cdot \sin\left(\frac{2.\Pi.(n-1).(i-1)}{N} + \arg(dd_i)\right)$$

and

$$\Delta'_{\varphi}(n) = \frac{-1}{\lambda} \cdot \frac{1}{N} \cdot \sum_{i=1}^{N} (1-\gamma_i) \cdot |dd_i| \cdot \cos\left(\frac{2.\Pi.(n-1).(i-1)}{N} + \arg(dd_i)\right)$$

the overall correction function $\Delta(n)$ corresponding to each component $\delta(n)$, being defined by the relation:

$$\Delta_n = \Delta'_a(n) + \Delta'_\varphi(n),$$

- a sixth step which consists in applying the correction function such as to compensate for the positioning errors of the radiating elements of a network antenna.

2. The process according to claim 1, wherein the value of $\gamma(i)$ is defined as a function of a threshold $K_0$ calculated on the basis of the pointing angle $\theta_0$ of which the value decreasingly varies as a function of $\theta_0$; $\gamma(i)$ being worth 1 when i is less than or equal to $k_0$ and 0 when i is greater than $k_0$.

3. The process according to either of claims 1 or 2, comprising a complementary step (86) of weighting components of the functions $\Delta_a(n)$ and $\Delta_\varphi(n)$ by a function f(i), the correction functions $\Delta'_a(n)$ and $\Delta'_\varphi(n)$ then being defined by the following relations:

$$\Delta'_{a}(n) = \frac{-1}{\lambda} \cdot \frac{1}{N} \cdot \sum_{i=1}^{N} f(i) \cdot \gamma_i \cdot |dd_i| \cdot \sin\left(\frac{2.\Pi.(n-1).(i-1)}{N} + \arg(dd_i)\right)$$

and

$$\Delta'_{\varphi}(n) = \frac{-1}{\lambda} \cdot \frac{1}{N} \cdot \sum_{i=1}^{N} f(i) \cdot (1-\gamma_i) \cdot |dd_i| \cdot \cos\left(\frac{2.\Pi.(n-1).(i-1)}{N} + \arg(dd_i)\right)$$

4. The process according to claim 3, wherein the weighting f(i) follows an increasing linear law as a function of i.

5. The process according to claim 3, wherein the weighting f(i) follows an increasing logarithmic law as a function of i.

6. A process for forming a radiation diagram $F_{ideal}(\theta)$ given on the basis of the actual diagram $F_{perturbed}(\theta)$ of a network antenna of the type comprising radiating elements formed by beams, each beam comprising a set of sources, each beam exhibiting a positioning deviation in relation to a theoretical positioning according to an interval P, **characterised in that** it comprises:

a first step consisting in measuring the actual position of each radiating element,
a second step consisting in implementing the process according to any of claims 1 to 6, the position error $\delta(n)$ of each element being calculated on the basis of the theoretical position of this element on the antenna and the actual position of this element measured in the preceding step;
a third step consisting in correcting the radiation diagram actually realised by means of the correction function $\Delta(n)$ obtained after the second step.

FIG.1

FIG.2

FIG.3

FIG.4

FIG.5

FIG.6

FIG.7

Mesures des écarts de
positionnement
Vecteur d'imperfections I — 81

Transformée de Fourier
discrète :
Calcul de $dd_i$ pour $i \in [\, 1,N \,]$ — 82

Transformée de Fourier
discrète inverse :
Calcul de $\delta\,(n)$ à partir des $dd_i$ — 83

Détermination des corrections
$\Delta_a(n)$ et $\Delta_\varphi(n)$ à partir de $\delta\,(n)$ — 84

Pondération des termes $dd_i$
en fonction de $i$
dans $\Delta_a(n)$ et $\Delta_\varphi(n)$ — 86

Choix de la correction
$\Delta_a(n)$ et $\Delta_\varphi(n)$ en fonction du
pointage de l'antenne — 85

FIG.8

FIG.9

FIG.10